# EUROPÄISCHE PATENTSCHRIFT

(11) **EP 3 854 929 B1**
(45) Veröffentlichungstag und Bekanntmachung des Hinweises auf die Patenterteilung: **24.04.2024**
(21) Anmeldenummer: 20216866.2
(22) Anmeldetag: 23.12.2020
(51) Int. Cl.: D06F 39/02, A47L 15/44, G01F 11/32

(54) **WASSERFÜHRENDES HAUSHALTSGERÄT MIT EINEM VORRATSBEHÄLTER FÜR EIN BEHANDLUNGSMITTEL**
WATER-CONDUCTING DOMESTIC APPLIANCE WITH A RESERVOIR FOR A TREATMENT AGENT
APPAREIL ÉLECTROMÉNAGER À CIRCULATION D'EAU POURVU DE RÉSERVOIR POUR UN PRODUIT DE TRAITEMENT

(30) Priorität: 22.01.2020 DE 102020200697
(43) Veröffentlichungstag der Anmeldung: 28.07.2021
(73) Patentinhaber: BSH Hausgeräte GmbH, 81739 München (DE)
(72) Erfinder: Eglmeier, Hans, 10587 Berlin (DE)

(56) Entgegenhaltungen:
- EP-A1- 0 956 808
- EP-A1- 1 777 332
- DE-A-102010 003 771
- DE-A1- 2 239 484
- DE-A1-102006 043 913
- US-A- 3 162 335

## Beschreibung

Die Erfindung betrifft ein wasserführendes Haushaltsgerät, insbesondere ein Wäschebehandlungsgerät zum Waschen und/oder Trocknen von Wäsche, mit einem Vorratsbehälter für ein Behandlungsmittel und einem Ventil, über das das Behandlungsmittel aus dem Vorratsbehälter in einen Behandlungsbereich führbar ist. Insbesondere betrifft die Erfindung das Gebiet der Waschmaschinen und Waschtrockner.

Aus der EP 2 319 977 A1 ist ein wasserführendes Hausgerät mit einem Gehäuse, einem ortsfesten Behälter, der ortsfest in dem Gehäuse angeordnet ist, und einem entnehmbaren Behälter bekannt. Dabei ist der entnehmbare Behälter in einem eingesetzten Zustand, in dem der entnehmbare Behälter in das Gehäuse eingesetzt ist, mit dem ortsfesten Behälter verbunden. Insbesondere können der ortsfeste Behälter als Reservebehälter und der entnehmbare Behälter als Vorratsbehälter dienen. Bei einer möglichen Ausgestaltung weist der entnehmbare Behälter an einer Auslaufstelle einen Kugelkäfig auf, in dem eine Kugel angeordnet ist. Der Kugelkäfig weist eine untere Öffnung und eine seitliche Öffnung in Form eines Fensters auf. Beim Einsetzen des entnehmbaren Behälters in den ortsfesten Behälter wird die Kugel in dem Kugelkäfig durch einen Hohldorn des ortsfesten Behälter angehoben. Dadurch wird die untere Öffnung von der Kugel freigegeben. Über die seitliche Öffnung des Kugelkäfigs und die untere Öffnung ist dadurch ein Abfließen eines Wäschebehandlungsmittels aus dem entnehmbaren Behälter in den ortsfesten Behälter ermöglicht. Wenn der entnehmbare Behälter aus dem Gehäuse entnommen wird, dann gelangt die Kugel aus ihrer angehobenen Position wieder in eine untere Position, in der die untere Öffnung des Kugelkäfigs in Bezug auf die seitliche Öffnung des Kugelkäfigs verschlossen ist. Möglich ist es auch, dass der entnehmbare Behälter im teilentleerten Zustand entnommen wird, wobei die Kugel ein Auslaufen des entnehmbaren Behälters verhindert. Ferner ist eine Pumpe vorgesehen, wobei eine Saugseite der Pumpe mit dem ortsfesten Behälter verbunden ist. Über die Pumpe kann ein Dosieren des Wäschebehandlungsmittels erfolgen.

Das aus der EP 2 319 977 A1 bekannte wasserführende Hausgerät hat den Nachteil, dass das Wäschebehandlungsmittel aus dem entnehmbaren Behälter zum Dosieren einen weiten Weg zurücklegt und über mehrere Schnittstellen beziehungsweise Einrichtungen geführt werden muss. Dadurch ist es nicht möglich, das Wäschebehandlungsmittel einfach durch ein anderes Wäschebehandlungsmittel zu ersetzen, beispielsweise wenn der entnehmbare Behälter leer ist. Denn dadurch würde es zu einer Mischung mit dem noch vorhandenen Wäschebehandlungsmittel im ortsfesten Behälter kommen. Außerdem wird für die Verbindung des entnehmbaren Behälters mit dem ortsfesten Behälter, die über die Kugel und den Kugelkäfig erfolgt, den ortsfesten Behälter und die Pumpe ein erheblicher Bauraum im Gehäuse beansprucht. Hinzu kommt, dass diese einzelnen Komponenten insgesamt zu erhöhten Kosten bei der Herstellung führen. Darüber hinaus ergeben sich Nachteile der Verbindung mittels der in dem Kugelkäfig angeordneten Kugel. Für die Kugel ist eine enge Führung in dem Kugelkäfig erforderlich, um die Abdichtung zu gewährleisten. Dadurch sind allerdings auch große Verstellbewegungen der Kugel erforderlich, um einen ausreichenden Durchflussquerschnitt zum Ausfließen des in der Regel vergleichsweise viskosen Wäschebehandlungsmittels zu ermöglichen. Wenn die Kugel in ihrer oberen Stellung, in der das Wäschebehandlungsmittel ausfließen kann, anhaftet, dann kann sich auch beim Entnehmen des teilgefüllten Behälters noch ein längeres Nachfließen ergeben. Dadurch kann es zu Verschmutzungen im Gehäuse und einem unnötigen Verbrauch des Wäschebehandlungsmittels kommen.

Aus den Druckschriften DE 22 39 484 A1, DE 10 2010 003771 A, EP 0 956 808 A1 und US 3 162 335 A sind jeweils Dosierventile zur Dosierung von Waschmitteln bei wasserführenden Haushaltsgeräten bekannt.

Eine Aufgabe der Erfindung ist es, ein wasserführendes Haushaltsgerät zu schaffen, das einen verbesserten Aufbau aufweist. Speziell ist es eine Aufgabe der Erfindung, ein wasserführendes Haushaltsgerät anzugeben, bei dem auf verbesserte Weise und mit einem reduzierten Aufwand eine Dosierung eines Behandlungsmittels aus einem Vorratsbehälter und eine Zuführung dieses dosierten Behandlungsmittels in einen Behandlungsbereich ermöglicht sind.

Die Aufgabe wird gelöst durch ein wasserführendes Haushaltsgerät, das insbesondere als Wäschebehandlungsgerät zum Waschen und/oder Trocknen von Wäsche dient, wobei das wasserführende Haushaltsgerät einen Behandlungsbereich, einen Vorratsbehälter, der ausgestaltet ist zum Aufnehmen einer Menge eines Behandlungsmittels, die für mehrere Behandlungsvorgänge ausreicht, und ein Ventil aufweist, über das das Behandlungsmittel aus dem Vorratsbehälter zumindest mittelbar in den Behandlungsbereich führbar ist, wobei das Ventil einen Ventilsitzkörper, der zumindest teilweise tellerförmig ausgestaltet ist, und einen, insbesondere ringförmigen, Ventilschließkörper aufweist, wobei der Ventilschließkörper zumindest von einer Schließkraft gegen den Ventilsitzkörper beaufschlagt ist und wobei zwischen dem Ventilsitzkörper und dem Ventilschließkörper ein Dichtsitz gebildet ist. Erfindungsgemäß ist ein Betätigungskörper vorgesehen, der zum Öffnen des zwischen dem Ventilsitzkörper und dem Ventilschließkörper gebildeten Dichtsitzes den Ventilschließkörper gegen die Schließkraft betätigt, und dass der Betätigungskörper eine Öffnung aufweist, durch die das Behandlungsmittel bei geöffnetem Dichtsitz aus dem Vorratsbehälter zumindest mittelbar zu dem Behandlungsbereich fließt.

Durch die in den Unteransprüchen aufgeführten Maßnahmen sind vorteilhafte Weiterbildungen des erfindungsgemäßen wasserführenden Haushaltsgeräts möglich.

Über das Ventil, bei dem der zumindest teilweise tellerförmig ausgestaltete Ventilsitzkörper mit dem bevorzugt ringförmigen Ventilschließkörper zu dem Dichtsitz zusammen wirkt, ist beim Öffnen des Dichtsitzes ein großer Öffnungsquerschnitt ermöglicht. Hierbei kann bereits bei einem vergleichsweise geringen Hub ein ausreichend großer Öffnungsquerschnitt erzielt werden, um auch das Durchfließen von vergleichsweise viskosen Behandlungsmitteln mit einer ausreichenden Strömungsgeschwindigkeit zu erzielen. Ferner wird über das Ventil sowohl eine Anbindung des Vorratsbehälters als auch eine Dosierung ermöglicht, was über ein Öffnen des Dichtsitzes und ein anschließendes Schließen des Dichtsitzes erfolgt. Hierdurch kann eine zusätzliche Dosiereinrichtung, insbesondere eine Dosierpumpe, eingespart werden.

Hierbei ist es auch von Vorteil, dass der Betätigungskörper als zumindest im Wesentlichen rohrförmiger Betätigungskörper ausgestaltet ist. Somit kann von dem Betätigungskörper sowohl die Funktion des Betätigens des Ventils durch Öffnen und Schließen des Dichtsitzes als auch die Funktion der Weiterleitung des über den geöffneten Dichtsitz fließenden Behandlungsmittels übernommen werden. Dies ermöglicht eine Ausgestaltung mit einer geringen Anzahl an Bauteilen und einen dementsprechend geringen Platzbedarf.

Vorteilhaft ist es auch, dass zwischen dem Betätigungskörper und dem Ventilschließkörper eine Abdichtung entlang einer geschlossenen Kurve, die die Öffnung des Betätigungskörpers umschließt, gebildet ist, wenn der Betätigungskörper den Ventilschließkörper gegen die Schließkraft betätigt. Somit kann eine Abdichtung zwischen dem vorzugsweise rohrförmigen Betätigungskörper und dem Ventilschließkörper insbesondere genau dann gebildet werden, wenn das Behandlungsmittel über den geöffneten Dichtsitz fließt. Allerdings ist es auch möglich, dass eine gewisse, geringe Vorspannung auf den Betätigungskörper ausgeübt wird, um die Abdichtung zwischen dem Betätigungskörper und dem Ventilschließkörper auch zwischen den einzelnen Dosiervorgängen zu gewährleisten.

Vorteilhaft ist es, dass der Betätigungskörper einen Innenraum aufweist, der als eine Portionskammer ausgebildet ist, und dass der Betätigungskörper bei einem Füllen des Innenraums des Betätigungskörpers mit dem Behandlungsmittel das Behandlungsmittel in einer Portionsmenge aufnimmt, die zumindest im Wesentlichen durch das Volumen der Portionskammer bestimmt ist. Auf diese Weise kann bei jedem Füllen des Betätigungskörper zumindest näherungsweise die Portionsmenge aus dem Vorratsbehälter entnommen werden. Bei einer möglichen Ausgestaltung des wasserführenden Haushaltsgeräts kann dann durch die Anzahl der bei einem Dosiervorgang entnommenen Portionsmengen die gewünschte Dosiermenge in den Behandlungsbereich geführt werden. Hierbei sind auch weitere Abwandlungen möglich. Beispielsweise können auch mehrere Betätigungskörper mit unterschiedlich großen Portionskammern vorgesehen sein, die über eine entsprechende Anzahl von Ventilen Behandlungsmittel aus dem Vorratsbehälter entnehmen. Hierdurch ist eine schnelle und genaue Entnahme der gewünschten Dosiermenge aus dem Vorratsbehälter möglich.

Vorteilhaft ist es, dass eine Steuerung und eine Betätigungseinrichtung vorgesehen sind, dass die Betätigungseinrichtung den Betätigungskörper zum Öffnen des zwischen dem Ventilsitzkörper und dem Ventilschließkörper gebildeten Dichtsitzes verstellt und dass die Steuerung dazu eingerichtet ist, die Betätigungseinrichtung entsprechend einem Programmablauf derart anzusteuern, dass durch zumindest einen Dosiervorgang, bei dem ein Öffnen und ein anschließendes Schließen des Dichtsitzes erfolgt, zumindest näherungsweise eine gemäß dem Programmablauf ermittelte Dosiermenge des Behandlungsmittels in den Behandlungsbereich geführt wird. Die Dosiermenge kann hierbei über die Öffnungsdauer zwischen dem Öffnen und dem anschließenden Schließen des Dichtsitzes und/oder über die Anzahl von Dosiervorgängen, bei denen ein Öffnen und ein anschließendes Schließen des Dichtsitzes erfolgt, bestimmt werden. Je nach Ausgestaltung kann somit für einen einzelnen Dosiervorgang eine konstante oder eine variable Öffnungsdauer vorgegeben sein. Beispielsweise kann die Dosierung auch in Bezug auf eine geeignete Erfassung einer Behandlungsmittelkonzentration im Behandlungsbereich kombiniert werden, was beispielsweise durch einen oder mehrere Sensoren möglich ist, die im Behandlungsbereich oder an einer anderen geeigneten Stelle im wasserführenden Haushaltsgerät angeordnet sind.

In vorteilhafter Weise ist eine Schließfeder vorgesehen, die den Ventilschließkörper mit der Schließkraft gegen den Ventilsitzkörper beaufschlagt, wobei die Schließfeder zwischen einem äußeren Bund des Ventilschließkörpers und dem Vorratsbehälter angeordnet ist. Ferner ist es vorteilhaft, dass ein elastisch verformbares Verbindungsstück vorgesehen ist, über das der Ventilschließkörper mit dem Vorratsbehälter verbunden ist. Die Schließfeder kann hierbei außerhalb des elastisch verformbaren Verbindungsstücks vorgesehen sein. Speziell kann die Schließfeder das elastisch verformbare Verbindungsstück mit mehreren Windungen umschließen. Die Schließfeder kann allerdings auch auf andere Weise ausgestaltet und geeignet angeordnet sein. Das elastisch verformbare Verbindungsstück kann in vorteilhafter Weise als Faltenbalg oder als elastisches Schlauchstück ausgestaltet sein. Zur Ermöglichung eines Hubs des Ventilschließkörpers können sich an dem elastischen Schlauchstück hierbei geeignete Verformungen ergeben. Beispielsweise kann das elastische Schlauchstück als weichelastisches, schlauchartiges Schlauchstück ausgestaltet sein, wobei die für den Ventilschließkörper erforderliche axiale Bewegung und auch andere Bewegungsanteile dabei aus einem Bogen oder einer Schlinge geholt werden können.

Vorteilhaft ist es auch, dass der Ventilsitzkörper ein tellerförmiges Teil und ein Führungsteil aufweist, dass der Dichtsitz zwischen dem tellerförmigen Teil des Ventilsitzkörpers und dem Ventilschließkörper gebildet ist und dass der Ventilschließkörper bei einem Schließen des Dichtsitzes durch das Führungsteil des Ventilsitzkörpers in eine vorgegebene Position relativ zu dem tellerförmigen Teil des Ventilsitzkörpers geführt ist. Somit kann bei der Schließbewegung des Ventilschließkörpers, die beim Schließen des Dichtsitzes erfolgt, eine geeignete Führung realisiert werden, um ein zuverlässiges Schließen des Dichtsitzes zu erzielen. Hierbei ist es ferner vorteilhaft, dass das Führungsteil des Ventilsitzkörpers so ausgestaltet ist, dass der von dem Betätigungskörper betätigte Ventilschließkörper relativ zu dem Ventilsitzkörper verkippbar ist. Somit ist während der Betätigung auch dann eine Abdichtung zwischen dem Betätigungskörper und dem Ventilschließkörper erzielbar, wenn der Betätigungskörper beispielsweise nicht genau axial an den Ventilschließkörper geführt wird. Dies ermöglicht auch gewisse Toleranzen für die Positionierung des Vorratsbehälters im Gehäuse.

Vorteilhaft ist es auch, dass an dem Ventilschließkörper eine ebene Dichtfläche ausgebildet ist und dass der Ventilschließkörper bei geschlossenem Dichtsitz mit seiner Dichtfläche an einem an dem Ventilsitzkörper vorgesehenen ringförmigen Dichtelement anliegt. Hierdurch kann auch die Positionierung des Ventilschließkörpers relativ zu dem Ventilsitzkörper zusätzlich zu der Führung durch das Führungsteil des Ventilsitzkörpers unterstützt werden.

Bei einer abgewandelten Ausgestaltung ist es allerdings vorteilhaft, dass an dem Ventilschließkörper eine Dichtfläche in Form eines Teils einer Kugeloberfläche ausgebildet ist und dass der Ventilschließkörper bei geschlossenem Dichtsitz mit seiner Dichtfläche an einem an dem Ventilsitzkörper vorgesehenen ringförmigen Dichtelement anliegt. Bei dieser Ausgestaltung kann eine Führung durch das Führungsteil auch mit größerem Spiel erfolgen oder solch eine Führung auch entfallen. Denn durch die Dichtfläche in Form des Teils der Kugeloberfläche kann in unterschiedlichen Positionen des Ventilschließkörpers relativ zu dem Ventilsitzkörper eine zuverlässige Abdichtung gewährleistet werden. Dies wirkt sich auch vorteilhaft auf einen wiederholten Betätigungsvorgang aus. Ferner erleichtert dies eine gegebenenfalls vorgesehene Abdichtung zwischen dem Betätigungskörper und dem Ventilschließkörper, die während der Betätigung und gegebenenfalls auch bei geschlossenem Dichtsitz vorgesehen ist.

Zur Dosierung des Behandlungsmittels wird der Dichtsitz zwischen dem Ventilsitzkörper und dem Ventilschließkörper vorzugsweise geöffnet und anschließend wieder geschlossen. Somit kommt es zu einem vollständigen Anschalten und Abschalten des Fluidstroms. Allerdings ist es auch möglich, dass eine kontinuierliche Steuerung des Fluidstroms erfolgt, indem dieser über den erzeugten Öffnungshub des Ventilschließkörpers beziehungsweise den dadurch bedingten Durchflussquerschnitt, über den das Behandlungsmittel über das Ventil aus dem Vorratsbehälter geführt wird, kontinuierlich gesteuert, insbesondere geregelt, wird. Beispielsweise kann die Konzentration einer in den Behandlungsbereich geführten wässrigen Lösung des Behandlungsmittels über einen Sensor gemessen werden und entsprechend eine Regelung des Fluidstroms erfolgen.

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigen:
Fig. 1 ein wasserführendes Haushaltsgerät in einer auszugsweisen, schematischen Schnittdarstellung entsprechend einem ersten Ausführungsbeispiel der Erfindung in einem geschlossenen Ventilzustand;
Fig. 2 eine auszugsweise Darstellung des in Fig. 1 gezeigten wasserführenden Haushaltsgeräts des ersten Ausführungsbeispiels der Erfindung in einem geöffneten Ventilzustand;
Fig. 3 eine auszugsweise Darstellung des in Fig. 1 gezeigten wasserführenden Haushaltsgeräts des ersten Ausführungsbeispiels der Erfindung in einer weiteren möglichen Stellung eines Ventils im geöffneten Ventilzustand;
Fig. 4 eine auszugsweise, schematische Schnittdarstellung eines Ventils des wasserführenden Haushaltsgeräts entsprechend einem zweiten Ausführungsbeispiel in einem geschlossenen Ventilzustand und
Fig. 5 das in Fig. 1 auszugsweise dargestellte Ventil des wasserführenden Haushaltsgeräts entsprechend dem zweiten Ausführungsbeispiel in einer weiteren möglichen Stellung im geschlossenen Ventilzustand.

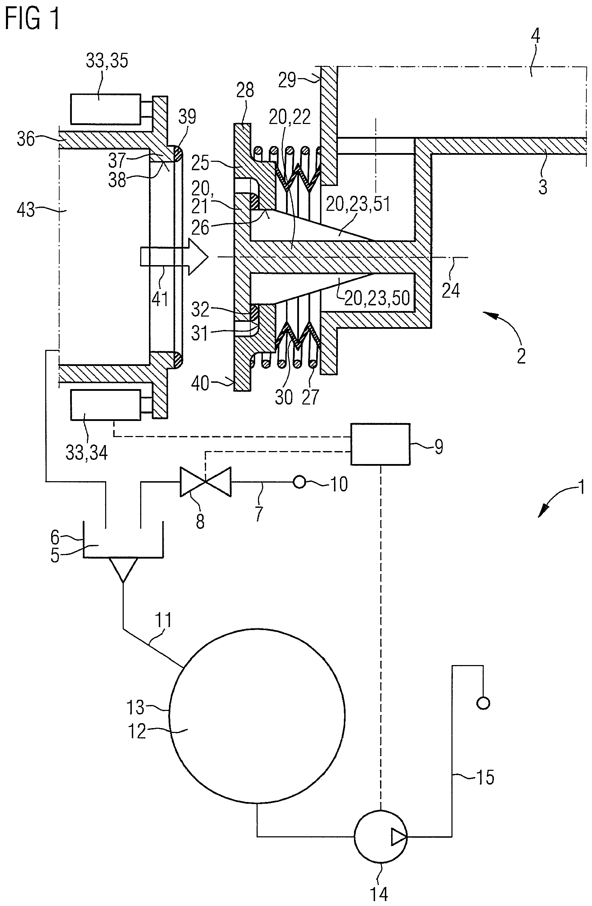

Fig. 1 zeigt ein wasserführendes Haushaltsgerät 1 in einer auszugsweisen, schematischen Schnittdarstellung entsprechend einem ersten Ausführungsbeispiel. Das wasserführende Haushaltsgerät 1 weist ein Ventil 2 auf, das in einem geschlossenen Ventilzustand dargestellt ist. Das wasserführende Haushaltsgerät 1 weist außerdem einen Vorratsbehälter 3 auf, der ein Behandlungsmittel 4 aufnimmt. Hierbei ist der Vorratsbehälter 3 ausgestaltet zum Aufnehmen einer Menge des Behandlungsmittels 4, die für mehrere Behandlungen beziehungsweise für mehrere Programmdurchläufe ausreicht. Hierbei können in dem Vorratsbehälter 3 auch mehrere Kammern vorgesehen sein, die zum Aufnehmen mehrerer, gegebenenfalls unterschiedlicher Behandlungsmittel dienen. Dementsprechend können dann auch weitere Ventile vorgesehen sein, die dem Ventil 2 entsprechen.

Über das Ventil 2 kann das Behandlungsmittel 4 in eine Kammer 5 einer Einspülvorrichtung 6 geführt werden. In die Kammer 5 mündet außerdem eine Frischwasserleitung 7, in der ein Sperrventil 8 angeordnet ist. Eine Steuerung 9 dient zum Ansteuern des Sperrventils 8, um entsprechend einem Programmablauf Frischwasser von einem Wasseranschluss 10 über die Frischwasserleitung 7 in die Einspülvorrichtung 6 zu führen. Bei geschlossenem Ventil 2 kann somit Frischwasser über einen Zulaufstutzen 11 in einen Behandlungsbereich 12 innerhalb eines Behandlungsbehälters 13 geführt werden. Wenn das Ventil 2 geöffnet ist, dann kann eine Mischung aus dem Behandlungsmittel 4 und dem Frischwasser in den Behandlungsbereich 12 geführt werden. Der Zulaufstutzen 11 verbindet die Einspülvorrichtung 6 mit dem Behandlungsbehälter 13. Der Behandlungsbehälter 13 kann insbesondere als Laugenbehälter 13 ausgestaltet sein.

Ferner ist eine von der Steuerung 9 ansteuerbare Pumpe 14 vorgesehen, die insbesondere als Laugenpumpe 14 ausgestaltet sein kann. Über eine Abpumpleitung 15 kann die Pumpe 14 die Flüssigkeit aus dem Behandlungsbereich 12 abpumpen. Je nach Ausgestaltung des wasserführenden Haushaltsgeräts 1 können hierbei auch weitere Funktionen realisiert sein, insbesondere eine wahlweise Umpumpfunktion, bei der entsprechend dem Programmablauf die Flüssigkeit aus dem Behandlungsbereich 12 entweder abgepumpt oder in den Behandlungsbereich 12 zurückgeführt werden kann. In den Behandlungsbereich 12 kann insbesondere Wäsche einer Wäschebehandlung mit einem oder mehreren Behandlungsmitteln 4 unterzogen werden. Hierbei können ein oder mehrere Behandlungsmittel zum Einsatz kommen. Zumindest eines dieser Behandlungsmittel ist als Behandlungsmittel 4 in dem Vorratsbehälter 3 bevorratet. Dabei ist eine automatische Dosierung des Behandlungsmittels 4 entsprechend dem Programmablauf der Steuerung 9 möglich. Zusätzlich kann gegebenenfalls auch eine manuelle Dosierung eines weiteren Behandlungsmittels durch einen Benutzer ermöglicht sein. Hierfür kann der Benutzer solch ein weiteres Behandlungsmittel beispielsweise vor dem Starten des Programmablaufs in eine Kammer der Einspülvorrichtung 6 einbringen, bei der es sich um die Kammer 5 oder auch eine weitere Kammer der Einspülvorrichtung 6 handeln kann.

Der Vorratsbehälter 3 ist vorzugsweise als entnehmbarer Vorratsbehälter 3 ausgestaltet. Hierbei kann der Vorratsbehälter 3 aus einem Gehäuse des wasserführenden Haushaltsgeräts 1 entnommen werden, um den Vorratsbehälter 3 aufzufüllen. Somit wird die Handhabung für einen Benutzer wesentlich erleichtert. Speziell kann der Vorratsbehälter 3 als ausziehbarer Vorratsbehälter 3 ausgestaltet sein, der wahlweise ganz oder teilweise aus dem Gehäuse gezogen werden kann. Dadurch kann im teilweise ausgezogenen Zustand ein Auffüllen erfolgen. Im ganz entnommenen Zustand kann der Vorratsbehälter 3 von dem Benutzer dann auf einfache Weise, insbesondere durch ein Abbrausen, gereinigt werden. Außerdem ist hierdurch eine Aufnahme für den Vorratsbehälter 3 im wasserführenden Haushaltsgerät 1 zugänglich, um auch eine Reinigung solch einer Aufnahme zu ermöglichen.

Das Ventil 2 ist in diesem Ausführungsbeispiel an dem Vorratsbehälter 3 ausgestaltet und zumindest zum Teil integraler Bestandteil des Vorratsbehälters 3. Das Ventil 2 weist einen Ventilsitzkörper 20 auf, der einstückig mit dem Vorratsbehälter 3 ausgestaltet ist. Beispielsweise können der Ventilsitzkörper 20 und der Vorratsbehälter 3 als gemeinsames Spritzgussteil aus einem Kunststoff hergestellt sein. Der Ventilsitzkörper 20 kann bei einer abgewandelten Ausgestaltung auch an den Vorratsbehälter 3 angespritzt sein. Der Ventilsitzkörper 20 weist ein tellerförmiges Teil 21, ein Verbindungsteil 22 und ein Führungsteil 23 auf. Somit ist der Ventilsitzkörper teilweise tellerförmig ausgestaltet. Über das Verbindungsteil 22 ist das tellerförmige Teil 21 mit dem Vorratsbehälter 3 verbunden. Das Verbindungsteil 22 erstreckt sich entlang einer Achse 24 des Ventils 2.

Das Ventil 2 weist außerdem einen ringförmigen Ventilschließkörper 25 auf. Der ringförmige Ventilschließkörper 25 ist in diesem Ausführungsbeispiel als tellerförmiger Ventilschließkörper 25 mit einer axialen Öffnung 26 ausgestaltet. Außerdem weist das Ventil 2 eine Schließfeder 27 auf, die den Ventilschließkörper 25 mit einer Schließkraft gegen den Ventilsitzkörper 20 beaufschlagt. Die Schließfeder 27 ist hierbei zwischen einem äußeren Bund 28 des Ventilschließkörpers 25 und einer Außenseite 29 des Vorratsbehälters 3 angeordnet. In diesem Ausführungsbeispiel ist die Schließfeder 27 außerhalb eines elastisch verformbaren Verbindungsstücks 30 angeordnet, über das der Ventilschließkörper 25 mit dem Vorratsbehälter 3 verbunden ist. Die Schließfeder 27 weist in diesem Ausführungsbeispiel mehrere Windungen auf, die das elastisch verformbare Verbindungsstück 30 umschließen.

Das elastisch verformbare Verbindungsstück 30 ist in diesem Ausführungsbeispiel als Faltenbalg 30 ausgestaltet. Bei einer abgewandelten Ausgestaltung kann das elastisch verformbare Verbindungsstück 30 auch als elastisches Schlauchstück 30 ausgestaltet sein.

In diesem Ausführungsbeispiel weist der Ventilschließkörper eine ebene Dichtfläche 31 auf. Ferner ist an dem Ventilsitzkörper 20 ein ringförmiges Dichtelement 32 vorgesehen, das der ebenen Dichtfläche 31 des Ventilschließkörpers 25 zugewandt ist. In der geschlossenen Stellung liegt der Ventilschließkörper 25 mit seiner Dichtfläche 31 an dem ringförmigen Dichtelement 32 an, das an dem Ventilsitzkörper 20 vorgesehen ist. Dadurch ist der Dichtsitz zwischen dem Ventilschließkörper 25 und dem Ventilsitzkörper 20 geschlossen.

Das wasserführende Haushaltsgerät 1 weist eine Betätigungseinrichtung 33 auf, die Aktoren 34, 35 umfasst. Ferner ist ein Betätigungskörper 36 vorgesehen, der als rohrförmiger Betätigungskörper 36 ausgestaltet ist. Der Betätigungskörper 36 weist an einem dem Ventil 2 zugewandten Ende eine Öffnung 38 auf. Ferner ist an dem Ende 37 ein Dichtring 39 angebracht. Der Dichtring 39 des Betätigungskörpers 36 ist einer Außenseite 40 des Ventilschließkörpers 25 zugewandt.

Wenn die Steuerung 9 die Betätigungseinrichtung 33 entsprechend einem Programmablauf zum Öffnen des Ventils ansteuert, dann betätigen die Aktoren 34, 35 der Betätigungseinrichtung 33 den Betätigungskörper 36, so dass der Betätigungskörper 36 in einer Richtung 41 verstellt wird. Die Richtung 41 ist hierbei vorzugsweise entlang der Achse 24 orientiert. Ferner ist der rohrförmige Betätigungskörper 36 vorzugsweise bezüglich der Achse 24 ausgerichtet.

Nach einem gewissen Verstellweg gelangt der Betätigungskörper 36 mit seinem Dichtring 39 in Anlage mit der Außenseite 40 des Ventilschließkörpers 25. Dann kommt es zu einem Öffnen des Ventils 2 beziehungsweise zu einem Öffnen des Dichtsitzes, der zwischen dem Ventilsitzkörper 20 und dem Ventilschließkörper 25 gebildet ist.

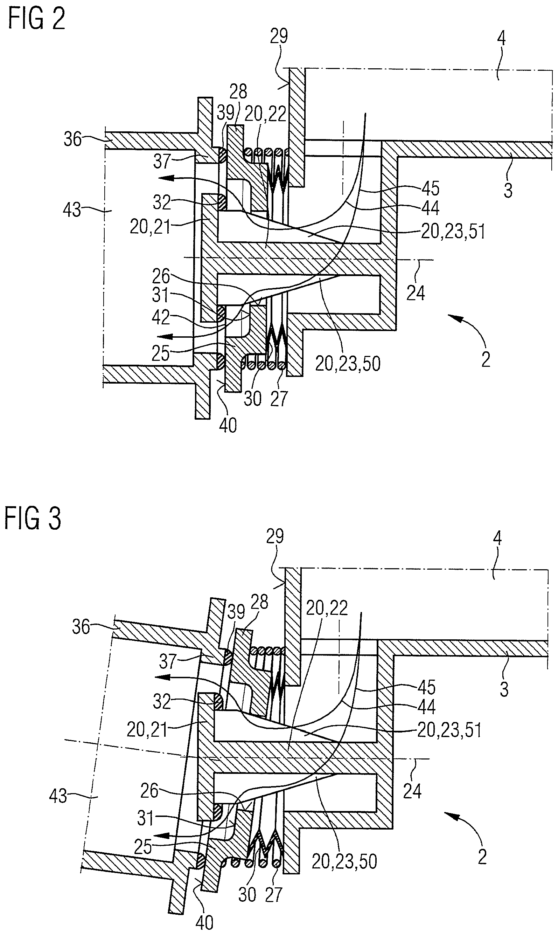

Fig. 2 zeigt eine auszugsweise Darstellung des in Fig. 1 gezeigten wasserführenden Haushaltsgeräts 1 des ersten Ausführungsbeispiels in einem geöffneten Ventilzustand. Hierbei hat der Betätigungskörper 36 den Ventilschließkörper 25 in axialer Richtung betätigt. Das Öffnen des Ventils 2 erfolgt somit in diesem Fall durch axiales Verschieben des Ventilschließkörpers 25 gegen die Schließkraft der Schließfeder 27. Dadurch wird der Dichtsitz geöffnet und es entsteht ein ringförmiger Spalt 42 zwischen dem Ventilschließkörper 25 und dem tellerförmigen Teil 21 des Ventilsitzkörpers 20. Das an dem zunächst noch geschlossenen Dichtsitz anstehende Behandlungsmittel 4 kann nun im geöffneten Ventilzustand über den ringförmigen Spalt 42 in einen Innenraum 43 des rohrförmigen Betätigungskörpers 36 fließen. Der rohrförmige Betätigungskörper 36, der den Ventilschließkörper 25 betätigt, dient hierbei zugleich als Rohrleitung für das Weiterleiten des Behandlungsmittels 4. Über den Dichtring 39 ist hierbei eine Abdichtung zwischen dem Betätigungskörper 36 und dem Ventilschließkörper 25 entlang einer geschlossenen Dichtkurve, die die Öffnung 38 des Betätigungskörpers 36 umschließt, gebildet, wenn der Betätigungskörper 36 den Ventilschließkörper 25 gegen die Schließkraft der Schließfeder 27 betätigt. Somit wird bei geöffnetem Ventil 2 ein Austritt des Behandlungsmittels 4 im Bereich des Ventils 2 verhindert. Andererseits ist im geschlossenen Ventilzustand die Abdichtung am Dichtsitz zwischen dem Ventilschließkörper 25 und dem Ventilsitzkörper 20 gebildet. Somit wird das Behandlungsmittel 4 entweder im Vorratsbehälter 3 gehalten oder durch den rohrförmigen Betätigungskörper 36 geleitet. In diesem Ausführungsbeispiel ist der Betätigungskörper 36 als Betätigungsstößel 36 ausgebildet.

Somit kann die das Ventil 2 betätigende Betätigungseinrichtung 33 mit den Aktoren 34, 35 einfach und kostengünstig ausgestaltet sein. Dies wird unter anderem dadurch erreicht, dass im Wesentlichen alle Dichtungs- und Führungsfunktionen in axialer Bauart ausgelegt sind. Damit treten beim Öffnen und Schließen des Ventils 2 vergleichsweise geringe Axialkräfte auf. Insbesondere ergeben sich hierbei geringe Reibungskräfte und es sind vergleichsweise geringe Kräfte zum Erzeugen der jeweiligen Dichtwirkung durch die im Wesentlichen axiale Kompression des Dichtelements 32 beziehungsweise des Dichtrings 39 erforderlich. Ferner kann durch die kompakte Bauart des Ventils 2 bei vergleichsweise kleinen Ausmaßen ein großer Durchflussquerschnitt beziehungsweise Leitungsquerschnitt bereitgestellt werden, der im geöffneten Ventilzustand zur Durchleitung des Behandlungsmittels 4 zur Verfügung steht. Dadurch können auch bei höherviskosen Behandlungsmitteln 4 große Volumenströme erreicht werden.

Zur Veranschaulichung der Funktionsweise sind mögliche Wege, die das Behandlungsmittel 4 im geöffneten Ventilzustand über den dann geöffneten Dichtsitz zwischen dem Ventilschließkörper 25 und dem Ventilsitzkörper 20 nehmen kann, exemplarisch durch mit Richtungspfeilen versehene Kurven 44, 45 veranschaulicht.

Fig. 3 zeigt eine auszugsweise Darstellung des in Fig. 1 gezeigten wasserführenden Haushaltsgeräts des ersten Ausführungsbeispiels in einer weiteren möglichen Stellung des Ventils 2 im geöffneten Ventilzustand. In dieser weiteren möglichen Stellung ist der Ventilschließkörper 25 gegenüber der in der Fig. 2 dargestellten axial ausgerichteten Stellung verkippt. Auf diese Weise ist ein Toleranzausgleich ermöglicht. Ferner liegt der Betätigungskörper 36 mit seinem Dichtring 39 außermittig an der Außenseite 40 des Ventilschließkörpers 25 an. Somit ist auch diesbezüglich ein Toleranzausgleich ermöglicht. Somit sind der Betätigungskörper 36 und der Ventilschließkörper 25, die bei der Betätigung des Ventils 2 zusammen wirken, in einem großen Bereich gegeneinander verschiebbar und/oder schwenkbar, so dass sich eine hohe Toleranz bezüglich einer erforderlichen Genauigkeit bei der Fertigung, Montage und dem Betrieb ergibt. Hierbei ergibt sich auch eine verbesserte Toleranz bezüglich einem Einsetzen des Vorratsbehälters 3 in eine geeignete Aufnahme des Gehäuses des wasserführenden Haushaltsgeräts 1, falls der Vorratsbehälter 3 als entnehmbarer und/oder ausziehbarer Vorratsbehälter 3 ausgestaltet ist.

Beim Schließen des Ventils 2 wird der Ventilschließkörper 25 von dem Führungsteil 23 wieder in die in der Fig. 1 dargestellte Ausgangsstellung im geschlossenen Ventilzustand geführt. Die Bewegung wird hierbei durch die Schließkraft der Schließfeder 27 gewährleistet. In diesem Ausführungsbeispiel ist das Führungsteil 23 durch Führungsrippen 50, 51 gebildet, die als Zentrierrippen 50, 51 ausgestaltet sind und zum Zentrieren des beweglichen Ventilschließkörpers 25 dienen. Die Anzahl solcher Führungsrippen 50, 51 kann hierbei in Bezug auf den jeweiligen Anwendungsfall vorgegeben sein.

Zum Öffnen des Ventils 2 ist eine gewisse Schubkraft beziehungsweise Betätigungskraft erforderlich, die von den Aktoren 34, 35 der Betätigungseinrichtung 33 aufgebracht werden muss. Diese Schubkraft zum Öffnen des Ventils 2 ist im Wesentlichen durch die Schließkraft der Schließfeder 27 zuzüglich der erforderlichen Kraft zum Verformen des elastisch verformbaren Verbindungsstücks 30 mit der darauf wirkenden Flüssigkeitssäule des Behandlungsmittels 4 gegeben. Andererseits wird somit im geschlossenen Ventilzustand der Ventilschließkörper 25 zumindest von der Schließkraft der Schließfeder 27 gegen den Ventilsitzkörper 20 beaufschlagt.

Hierbei ergibt sich ferner der Vorteil, dass beim Öffnen des Ventils die Schubkraft (Öffnungskraft) über den Dichtring 39 übertragen wird, so dass diesbezüglich die Dichtwirkung entsprechend verstärkt ist. Andererseits wird im geschlossenen Ventilzustand die Schließkraft der Schließfeder 27 sowie die Druckkraft der anstehenden Flüssigkeitssäule des Behandlungsmittels 4 über den Ventilschließkörper 25 auf das Dichtelement 32 übertragen, wodurch auch hier die Dichtwirkung entsprechend verstärkt ist. Außerdem ergibt sich ein sehr großer Ventilquerschnitt mit einem geringen Hub, was dem Volumenstrom auch bei hochviskosen Behandlungsmitteln 4 zugutekommt.

Bei einer abgewandelten Ausgestaltung kann der Betätigungskörper 36 auch auf andere Weise ausgestaltet sein. Insbesondere kann der Betätigungskörper 36 einen Innenraum 43 aufweisen, der als Portionskammer 43 ausgestaltet ist. Durch ein zeitweises Öffnen des Ventils 2 kann der Innenraum 43 dann mit Behandlungsmittel 4 gefüllt werden. Die Portionskammer 43 füllt sich, bis im Innenraum des Betätigungskörpers 36 nach dem Prinzip von miteinander kommunizierenden Röhren sich im Innenraum 43 dasselbe Füllniveau wie im Vorratsbehälter 3 erreicht ist. Der Innenraum 43 des Betätigungskörpers ist derart ausgebildet, dass für verschiedene Füllniveaus im Vorratsbehälter 3 im Wesentlichen der Innenraum 43 mit demselben Volumen an Behandlungsmittel 4 füllt, wobei dieses Volumen eine Portion an Behandlungsmittel 4 bestimmt. Dies kann dadurch erreicht werden, das der Innenraum 43 bis zur maximalen Füllhöhe des Vorratsbehälters 3 reicht, wobei der obere Bereich des Innenraums 43 ein deutlich geringeres Volumen als der untere Bereich des Innenraum 43 hat, d.h. das Volumen des unteren Bereich des Innenraums bildet die Portionskammer und bestimmt im Wesentlichen die Portionsmenge.

Anschließend kann bei geschlossenem Ventil 2 der als Portionskammer 43 dienende Innenraum 43 über die Kammer 5 der Einspülvorrichtung 6 in den Behandlungsbereich 12 entleert werden. Hierdurch ist eine portionsweise Dosierung möglich. Hierfür kann beispielsweise ein Abfluss aus dem Innenraum 43 in die Kammer 5 der Einspülvorrichtung 6 eine vergleichsweise hohe Drosselwirkung beziehungsweise einen vergleichsweisen kleinen Öffnungsquerschnitt in Bezug auf den Zufluss über das geöffnete Ventil 2 aufweisen. Ferner kann die Kammer 43 zunächst gefüllt und dann bei geschlossenem Ventil 2 über die Öffnung 38 direkt in die Kammer 5 entleert werden.

Die Dosierung des Behandlungsmittels 4 kann allerdings auch über die Öffnungsdauer des Ventils 2 realisiert werden. Ferner ist auch eine kontinuierliche Zuführung des Behandlungsmittels 4 möglich, wobei eine Steuerung, insbesondere Regelung, des Durchflusses von Behandlungsmittel 4 über das Ventil 2 durch eine Variation des Öffnungsquerschnittes erfolgt. Hierfür ist die Betätigungseinrichtung 33 so ausgestaltet, dass ein variabler Hub des Ventilschließkörpers 25 ermöglicht ist.

Es ist anzumerken, dass der Ventilsitzkörper 20, insbesondere das tellerförmige Teil 21 des Ventilsitzkörpers 20, relativ zum Vorratsbehälter 3 ortsfest angeordnet ist, während der Ventilschließkörper 25 relativ zu dem Vorratsbehälter 3 beweglich angeordnet ist.

Somit ist es in vorteilhafter Weise möglich, dass die Steuerung 9 die Betätigungseinrichtung entsprechend einem Programmablauf so ansteuert, dass durch zumindest einen Dosiervorgang, bei dem ein Öffnen und ein anschließendes Schließen des Dichtsitzes, der zwischen dem Ventilschließkörper 25 und dem Ventilsitzkörper 20 gebildet ist, erfolgt, zumindest näherungsweise eine gemäß dem Programmablauf ermittelte Dosiermenge des Behandlungsmittels 4 in den Behandlungsbereich 12 geführt wird. Hierbei verstellt die Betätigungseinrichtung 33 den Betätigungskörper 36 zum Öffnen des zwischen dem Ventilsitzkörper 20 und dem Ventilschließkörper 25 gebildeten Dichtsitzes. Die gemäß dem Programmablauf ermittelte Dosiermenge des Behandlungsmittels 4 kann insbesondere in Bezug auf eine Beladungsmenge des Behandlungsbehälter 13, die beispielsweise über die Gewichtskraft der zu behandelnden Wäsche oder dergleichen bestimmt werden kann, und/oder in Bezug auf eine Wasserhärte ermittelt werden.

Im geschlossenen Ventilzustand kann für den Ventilschließkörper 25 eine vorgegebene Position bestimmt sein. Diese vorgegebene Position entspricht vorzugsweise einer axialen Ausrichtung des Ventilschließkörpers 25 bezüglich der Achse 24, wie es in der Fig. 1 dargestellt ist. Beim Schließen des Dichtsitzes ist der Ventilschließkörper 25 dann durch das Führungsteil 23 des Ventilsitzkörpers 20 in die vorgegebene Position relativ zu dem tellerförmigen Teil 21 des Ventilsitzkörpers 20 geführt. Die Führungsrippen 50, 51 des Führungsteils 23 sind zusätzlich so ausgestaltet, dass der Ventilschließkörper 25 im geöffneten Ventilzustand relativ zu dem Ventilsitzkörper 20 verkippbar ist.

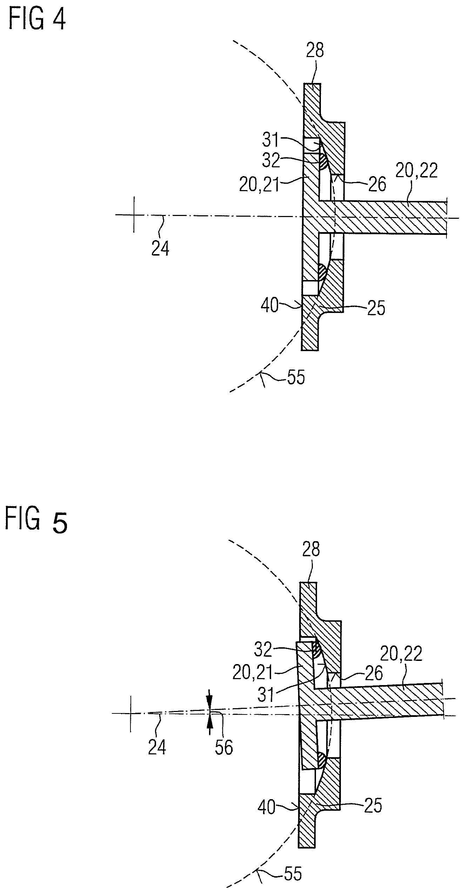

Fig. 4 zeigt eine auszugsweise, schematische Schnittdarstellung des Ventils 2 des wasserführenden Haushaltsgeräts 1 entsprechend einem zweiten Ausführungsbeispiel in einem geschlossenen Ventilzustand. In diesem Ausführungsbeispiel ist die Dichtfläche 31 des Ventilschließkörpers 25 in Form eines Teils einer Kugeloberfläche 55 ausgebildet. Ferner besteht der Ventilsitzkörper 20 in diesem Ausführungsbeispiel aus dem tellerförmigen Teil 21 und dem Verbindungsteils 22, wobei im Unterschied zu dem ersten Ausführungsbeispiel kein Führungsteil 23 vorgesehen ist. Für den Ventilschließkörper 25 ist somit keine bestimmte Position relativ zu dem Ventilsitzkörper 20 im geschlossenen Ventilzustand definiert. Dadurch ist eine Winkelbeweglichkeit des beweglichen, tellerförmigen Ventilschließkörpers 25 gegen den festen Ventilsitzkörper 20, insbesondere das tellerförmige Teil 21 des Ventilsitzkörpers 20, möglich, wobei zugleich die Dichtwirkung über das regenförmige Dichtelement 32 gewährleistet ist.

Fig. 5 zeigt das in Fig. 4 auszugsweise dargestellte Ventil 2 des wasserführenden Haushaltsgeräts 1 entsprechend dem zweiten Ausführungsbeispiel in einer weiteren möglichen Stellung im geschlossenen Ventilzustand. Während der Ventilschließkörper 25 bei der in der Fig. 4 dargestellten Stellung im geschlossenen Zustand axial ausgerichtet ist, ist der Ventilschließkörper 25 bei der in der Fig. 5 gezeigten weiteren möglichen Stellung im geschlossenen Zustand unter einem Winkelversatz 56 an dem tellerförmigen Teil 21 des Ventilsitzkörpers 20 positioniert.

Ferner gibt es unzählige weitere mögliche Stellungen, bei denen im geschlossenen Ventilzustand der Ventilschließkörper 25 relativ zu dem Ventilsitzkörper 20 positioniert werden kann. Für den Winkelversatz 56 werden hierfür vorzugsweise zwei Freiheitsgrade ermöglicht.

Das Ventil 2 des zweiten Ausführungsbeispiels ermöglicht somit auch bei sehr groben Winkel- und Lageabweichungen zwischen dem Ventilschließkörper 25 und dem Betätigungskörper 36, der zum Betätigen des Ventilschließkörpers 25 dient, von Beginn an über den gesamten Betätigungsvorgang eine Abdichtung an dem Dichtring 39. Hierbei bleibt der bewegliche Ventilschließkörper 25 beim Schließen in der zuletzt eingenommenen Lage, die in der Regel mit der zum Öffnen benötigten Lage identisch ist. Hierdurch kann die Betätigungseinrichtung 33 vereinfacht ausgestaltet werden, da beliebige Bewegungskurven möglich sind, weil sich der Ventilschließkörper 25 statisch und dynamisch an die gegebene Situation anpasst.

Somit können durch die praktisch nur axial wirkenden Dichtungs- und Führungselemente, insbesondere das Dichtelement 32, den Dichtring 39 und das Führungsteil 23, die Axialkräfte beim Andocken und Betätigen des Ventils 2 reduziert werden. Ferner verzeiht das Ventil 2 bauartbedingt auch sehr große Abweichungen im Winkelversatz 56 und der Lage der Achsen der zusammenwirkenden Teile.

Durch die beiden Eigenschaften, geringe Betätigungskraft und hohe Fehlertoleranz, ist das Ventil 2 besonders geeignet für kostengünstige Ventilverbindungen, zum Beispiel als kombiniertes Schalt- und Bodenauslassventil in Dosiersystemen. Die kompakte Bauart erlaubt große Querschnitte für den Fluiddurchtritt und zusätzlich ergibt sich ein großer Öffnungsquerschnitt je Hub. Bei Verwendung viskoser Behandlungsmittel 4 lässt sich so bei vergleichsweise geringem Arbeitshub ein hoher Volumenstrom erzeugen.

Bei dem Behandlungsmittel 4 handelt es sich um ein fließfähiges Behandlungsmittel 4. Hierbei kann das Behandlungsmittel 4 allerdings auch in einer nicht ausschließlich flüssigen Form, insbesondere als Gemisch einer fließfähigen Komponente mit festen Bestandteilen, insbesondere einer pulverförmigen Komponente, dosiert werden. Ferner kann das Behandlungsmittel 4 auch aus einem Gemisch eines Konzentrats mit einer wässrigen Flüssigkeit, insbesondere Frischwasser, hergestellt und dann zum Dosieren bereitgestellt werden. Somit ergibt sich ein großer Anwendungsbereich.

Die Erfindung ist nicht auf die beschriebenen Ausführungsbeispiele beschränkt.

### Bezugszeichenliste

1 wasserführendes Haushaltsgerät
2 Ventil
3 Vorratsbehälter
4 Behandlungsmittel
5 Kammer
6 Einspülvorrichtung
7 Frischwasserleitung
8 Sperrventil
9 Steuerung
10 Wasseranschluss
11 Zulaufstutzen
12 Behandlungsbereich
13 Behandlungsbehälter
14 Pumpe
15 Abpumpleitung
20 Ventilsitzkörper
21 tellerförmiges Teil
22 Verbindungsteil
23 Führungsteil
24 Achse
25 ringförmiger Ventilschließkörper
26 Öffnung
27 Schließfeder
28 äußerer Bund
29 Außenseite
30 elastisch verformbares Verbindungsstück
31 ebene Dichtfläche
32 ringförmiges Dichtelement
33 Betätigungseinrichtung
34, 35 Aktor
36 Betätigungskörper
37 Ende
38 Öffnung
39 Dichtring
40 Außenseite
41 Richtung
42 ringförmiger Spalt
43 Innenraum
44, 45 Kurve
50, 51 Führungsrippe
55 Kugeloberfläche
56 Winkelversatz

## Patentansprüche

1. Wasserführendes Haushaltsgerät (1), insbesondere Wäschebehandlungsgerät zum Waschen und/oder Trocknen von Wäsche, mit einem Behandlungsbereich (12), einem Vorratsbehälter (3), der ausgestaltet ist zum Aufnehmen einer Menge eines Behandlungsmittels (4), die für mehrere Behandlungsvorgänge ausreicht, und einem Ventil (2), über das das Behandlungsmittel (4) aus dem Vorratsbehälter (3) zumindest mittelbar in den Behandlungsbereich (12) führbar ist,
wobei das Ventil (2) einen Ventilsitzkörper (20), der zumindest teilweise tellerförmig ausgestaltet ist, und einen, insbesondere ringförmigen, Ventilschließkörper (25) aufweist, dass der Ventilschließkörper (25) zumindest von einer Schließkraft gegen den Ventilsitzkörper (20) beaufschlagt ist und dass zwischen dem Ventilsitzkörper (20) und dem Ventilschließkörper (25) ein Dichtsitz gebildet ist, **dadurch gekennzeichnet, dass**
ein Betätigungskörper (36) vorgesehen ist, der zum Öffnen des zwischen dem Ventilsitzkörper (20) und dem Ventilschließkörper (25) gebildeten Dichtsitzes den Ventilschließkörper (25) gegen die Schließkraft betätigt und dass der Betätigungskörper (36) eine Öffnung (38) aufweist, durch die das Behandlungsmittel (4) bei geöffnetem Dichtsitz aus dem Vorratsbehälter (3) zumindest mittelbar zu dem Behandlungsbereich (12) fließt.

2. Wasserführendes Haushaltsgerät nach Anspruch 1, **dadurch gekennzeichnet, dass** der Betätigungskörper (36) als zumindest im Wesentlichen rohrförmiger Betätigungskörper (36) ausgestaltet ist.

3. Wasserführendes Haushaltsgerät nach Anspruch 1 oder 2, **dadurch gekennzeichnet, dass** zwischen dem Betätigungskörper (36) und dem Ventilschließkörper (25) eine Abdichtung entlang einer geschlossenen Kurve, die die Öffnung (26) des Betätigungskörpers (36) umschließt, gebildet ist, wenn der Betätigungskörper (36) den Ventilschließkörper (25) gegen die Schließkraft betätigt.

4. Wasserführendes Haushaltsgerät nach einem der Ansprüche 1 bis 3, **dadurch gekennzeichnet, dass** der Betätigungskörper (36) einen Innenraum (43) aufweist, der als Portionskammer (43) ausgestaltet ist.

5. Wasserführendes Haushaltsgerät nach einem der Ansprüche 1 bis 4, **dadurch gekennzeichnet, dass** eine Steuerung (9) und eine Betätigungseinrichtung (33) vorgesehen sind, dass die Betätigungseinrichtung (33) den Betätigungskörper (36) zum Öffnen des zwischen dem Ventilsitzkörper (20) und dem Ventilschließkörper (25) gebildeten Dichtsitzes verstellt und dass die Steuerung (9) dazu eingerichtet ist, die Betätigungseinrichtung (33) entsprechend einem Programmablauf derart anzusteuern, dass durch zumindest einen Dosiervorgang, bei dem ein Öffnen und ein anschließendes Schließen des Dichtsitzes erfolgt, zumindest eine gemäß dem Programmablauf ermittelte Dosiermenge des Behandlungsmittels (4) in den Behandlungsbereich (12) geführt wird.

6. Wasserführendes Haushaltsgerät nach einem der Ansprüche 1 bis 5, **dadurch gekennzeichnet, dass** eine Schließfeder (27) vorgesehen ist, die den Ventilschließkörper (25) mit der Schließkraft gegen den Ventilsitzkörper (20) beaufschlagt, und dass die Schließfeder (27) zwischen einem äußeren Bund (28) des Ventilschließkörpers (25) und dem Vorratsbehälter (3) angeordnet ist.

7. Wasserführendes Haushaltsgerät nach einem der Ansprüche 1 bis 6, **dadurch gekennzeichnet, dass** ein elastisch verformbares Verbindungsstück (30) vorgesehen ist, über das der Ventilschließkörper (25) mit dem Vorratsbehälter (3) verbunden ist.

8. Wasserführendes Haushaltsgerät nach einem der Ansprüche 1 bis 7, **dadurch gekennzeichnet, dass** der Ventilsitzkörper (20) ein tellerförmiges Teil (21) und ein Führungsteil (23) aufweist, dass der Dichtsitz zwischen dem tellerförmigen Teil (21) des Ventilsitzkörpers (20) und dem Ventilschließkörper (25) gebildet ist und dass der Ventilschließkörper (25) bei einem Schließen des Dichtsitzes durch das Führungsteil (23) des Ventilsitzkörpers (20) in eine vorgegebene Position relativ zu dem tellerförmigen Teil (21) des Ventilsitzkörpers (20) geführt ist.

9. Wasserführendes Haushaltsgerät nach Anspruch 8, **dadurch gekennzeichnet, dass** das Führungsteil (23) des Ventilsitzkörpers (20) so ausgestaltet ist, dass der betätigte Ventilschließkörper (25) relativ zu dem Ventilsitzkörper (20) verkippbar ist.

10. Wasserführendes Haushaltsgerät nach einem der Ansprüche 1 bis 9, **dadurch gekennzeichnet, dass** an dem Ventilschließkörper (25) eine ebene Dichtfläche (31) ausgebildet ist und dass der Ventilschließkörper (25) bei geschlossenem Dichtsitz mit seiner Dichtfläche an einem an dem Ventilsitzkörper (20) vorgesehenen ringförmigen Dichtelement (32) anliegt.

11. Wasserführendes Haushaltsgerät nach einem der Ansprüche 1 bis 9, **dadurch gekennzeichnet, dass** an dem Ventilschließkörper (25) eine Dichtfläche (31) in Form eines Teils einer Kugeloberfläche (55) ausgebildet ist und dass der Ventilschließkörper (25) bei geschlossenem Dichtsitz mit seiner Dichtfläche (31) an einem an dem Ventilsitzkörper (20) vorgesehenen ringförmigen Dichtelement (32) anliegt.

## Claims

1. Water-guiding household appliance (1), in particular laundry treatment appliance for washing and/or drying laundry, with a treatment area (12), a reservoir (3) which is designed to receive a quantity of a treatment agent (4) which suffices for a plurality of treatment processes, and a valve (2) via which the treatment agent (4) can be guided out of the reservoir at least indirectly into the treatment area (12),
wherein the valve (2) has a valve seat body (20) which is designed so as to be at least partially plate-shaped, and an, in particular circular, valve closure body (25), such that the valve closure body (25) is applied against the valve seat body (20) at least by a closure force and such that a sealing seat is formed between the valve seat body (20) and the valve closure body (25),
**characterised in that**
an actuating body (36) is provided, which, in order to open the sealing seat formed between the valve seat body (20) and the valve closure body (25), actuates the valve closure body (25) against the closure force and **in that** the actuating body (36) has an opening (38) via which the treatment agent (4), when the sealing seat is open, flows out of the reservoir (3) and at least indirectly into the treatment area (12).

2. Water-guiding household appliance according to claim 1, **characterised in that** the actuating body (36) is designed at least essentially as a tubular actuating body (36).

3. Water-guiding household appliance according to claim 1 or 2, **characterised in that** a sealing is formed between the actuating body (36) and the valve closure body (25) along a self-contained curve which encloses the opening (26) of the actuating body (36) when the actuating body (36) actuates the valve closure body (25) against the closure force.

4. Water-guiding household appliance according to one of claims 1 to 3, **characterised in that** the actuating body (36) has an interior (43) which is designed as a portioning chamber (43).

5. Water-guiding household appliance according to one of claims 1 to 4, **characterised in that** a controller (9) and an actuating facility (33) are provided, such that the actuating facility (33) adjusts the actuating body (36) so as to open the sealing seat which is formed between the valve seat body (20) an the valve closure body (25) and **in that** the controller (9) is configured to control the actuating facility (33) according to a program sequence in such a manner that by way of at least one dosing process, in which an opening and a subsequent closing of the sealing seat takes place, at least one dosage quantity of the treatment agent (4) determined in accordance with the program sequence is guided into the treatment area (12).

6. Water-guiding household appliance according to one of claims 1 to 5, **characterised in that** a closure spring (27) is provided which, with the closure force, applies the valve closure body (25) against the valve seat body (20), and **in that** the closure spring (27) is arranged between an outer collar (28) of the valve closure body (25) and the reservoir (3).

7. Water-guiding household appliance according to one of claims 1 to 6, **characterised in that** an elastically deformable connecting piece (30) is provided, by way of which the valve closure body (25) is connected to the reservoir (3).

8. Water-guiding household appliance according to one of claims 1 to 7, **characterised in that** the valve seat body (20) has a plate-shaped part (21) and a guide part (23), that the sealing seat is formed between the plate-shaped part (21) of the valve seat body (20) and the valve closure body (25) and **in that** the valve closure body (25) is guided into a predefined position relative to the plate-shaped part (21) of the valve closure body (20) when the sealing seat in closed by way of the guide part (23) of the valve seat body (20).

9. Water-guiding household appliance according to claim 8, **characterised in that** the guide part (23) of the valve seat body (20) is designed such that the actuated valve closure body (25) can be tilted relative to the valve seat body (20).

10. Water-guiding household appliance according to one of claims 1 to 9, **characterised in that** a planar sealing surface (31) is formed on the valve closure body (25) and **in that**, when the sealing seat is closed, the valve closure body (25) rests with its sealing surface on a circular sealing element (32) provided on the valve seat body (20).

11. Water-guiding household appliance according to one of claims 1 to 9, **characterised in that** a sealing surface (31) is configured in the form of a part of a spherical surface (55) on the valve closure body (25) and **in that**, when the sealing seat is closed, the valve closure body (25) rests with its sealing surface (31) on a circular sealing element (32) provided on the valve seat body (20).

## Revendications

1. Appareil électroménager à circulation d'eau (1), en particulier appareil de traitement du linge pour laver et/ou sécher du linge, comprenant une zone de traitement (12), un réservoir (3) configuré pour recevoir une quantité d'un produit de traitement (4), qui suffit pour plusieurs opérations de traitement, et une soupape (2), par le biais de laquelle le produit de traitement (4) peut être guidé à partir du réservoir (3) au moins indirectement dans la zone de traitement (12),
dans lequel la soupape (2) comprend un corps de siège de soupape (20), qui est configuré au moins en partie sous forme de plateau, et un organe d'obturation de soupape (25), en particulier en forme d'anneau, de sorte que
l'organe d'obturation de soupape (25) est sollicité au moins par une force de fermeture contre le corps de siège de soupape (20) et qu'un siège d'étanchéité est formé entre le corps de siège de soupape (20) et l'organe d'obturation de soupape (25),
**caractérisé en ce qu'**un corps d'actionnement (36) est prévu, lequel actionne l'organe d'obturation de soupape (25) contre la force de fermeture pour ouvrir le siège d'étanchéité formé entre le corps de siège de soupape (20) et l'organe d'obturation de soupape (25) et **en ce que** le corps d'actionnement (36) comprend un orifice (38) à travers lequel le produit de traitement (4) s'écoule du réservoir (3) au moins indirectement jusqu'à la zone de traitement (12) lorsque le siège d'étanchéité est ouvert.

2. Appareil électroménager à circulation d'eau selon la revendication 1, **caractérisé en ce que** le corps d'actionnement (36) est configuré sous forme de corps d'actionnement (36) au moins essentiellement tubulaire.

3. Appareil électroménager à circulation d'eau selon la revendication 1 ou 2, **caractérisé en ce qu'**un joint étanche est formé entre le corps d'actionnement (36) et l'organe d'obturation de soupape (25), le long d'une courbe fermée qui entoure l'orifice (26) du corps d'actionnement (36) lorsque le corps d'actionnement (36) actionne l'organe d'obturation de soupape (25) contre la force de fermeture.

4. Appareil électroménager à circulation d'eau selon l'une des revendications 1 à 3, **caractérisé en ce que** le corps d'actionnement (36) comprend un espace intérieur (43) qui est configuré sous forme d'un compartiment de portion (43).

5. Appareil électroménager à circulation d'eau selon l'une des revendications 1 à 4, **caractérisé en ce qu'**une commande (9) et un moyen d'actionnement (39) sont prévus, **en ce que** le moyen d'actionnement (33) déplace le corps d'actionnement (36) pour ouvrir le siège d'étanchéité formé entre le corps de siège de soupape (20) et l'organe d'obturation de soupape (25), et **en ce que** la commande (9) est configurée pour commander le moyen d'actionnement (33) selon un déroulement de programme de sorte qu'au moins une quantité dosée du produit de traitement (4) déterminée selon le déroulement de programme soit amenée dans la zone de traitement (12) par au moins une opération de dosage, dans laquelle une ouverture et une fermeture suivante du siège d'étanchéité est effectuée.

6. Appareil électroménager à circulation d'eau selon l'une des revendications 1 à 5, **caractérisé en ce qu'**un ressort d'obturation (27) est prévu, lequel sollicite l'organe d'obturation de soupape (25) avec la force de fermeture contre le corps de siège de soupape (20), et **en ce que** le ressort d'obturation (27) est disposé entre un collet extérieur (28) de l'organe d'obturation de soupape (25) et le réservoir (3).

7. Appareil électroménager à circulation d'eau selon l'une des revendications 1 à 6, **caractérisé en ce qu'**une pièce de liaison (30) élastiquement déformable est prévue, par le biais de laquelle l'organe d'obturation de soupape (25) est relié au réservoir (3).

8. Appareil électroménager à circulation d'eau selon l'une des revendications 1 à 7, **caractérisé en ce que** le corps de siège de soupape (20) comprend une partie en forme de plateau (21) et une partie de guidage (23), **en ce que** le siège d'étanchéité est formé entre la partie en forme de plateau (21) du corps de siège de soupape (20) et l'organe d'obturation de soupape (25) et **en ce que** l'organe d'obturation de soupape (25) est guidé, lors d'une fermeture du siège d'étanchéité, par la partie de guidage (23) du corps de siège de soupape (20) dans une position prédéterminée par rapport à la partie en forme de plateau (21) du corps de siège de soupape (20).

9. Appareil électroménager à circulation d'eau selon la revendication 8, **caractérisé en ce que** la partie de guidage (23) du corps de siège de soupape (20) est configurée de telle sorte que l'organe d'obturation de soupape actionné (25) peut basculer par rapport au corps de siège de soupape (20).

10. Appareil électroménager à circulation d'eau selon l'une des revendications 1 à 9, **caractérisé en ce qu'**une surface d'étanchéité (31) plane est formée sur l'organe d'obturation de soupape (25) et **en ce que** l'organe d'obturation de soupape (25), lorsque le siège d'étanchéité est obturé, repose avec sa surface d'étanchéité contre un élément d'étanchéité (32) annulaire agencé sur le corps de siège de soupape (20).

11. Appareil électroménager à circulation d'eau selon l'une des revendications 1 à 9, **caractérisé en ce qu'**une surface d'étanchéité (31) sur l'organe d'obturation de soupape (25) est configurée sous forme d'une partie d'une surface sphérique (55) et **en ce que** l'organe d'obturation de soupape (25), lorsque le siège d'étanchéité est obturé, repose avec sa surface d'étanchéité (31) contre un élément d'étanchéité (32) annulaire agencé sur le corps de siège de soupape (20).
